# FASCICULE DE BREVET EUROPEEN

(11) **EP 3 234 044 B1**
(45) Date de publication et mention de la délivrance du brevet: **07.10.2020**
(21) Numéro de dépôt: 15823640.6
(22) Date de dépôt: 14.12.2015
(51) Int. Cl.: C09D 13/00, B43K 19/02, B43K 19/18

(54) **MINE DE CRAYON A PAPIER**
PAPIERSTIFTMINE
PAPER PENCIL LEAD

(30) Priorité: 17.12.2014 FR 1462662
(43) Date de publication de la demande: 25.10.2017
(73) Titulaire: Conte, 62200 Boulogne sur Mer (FR)
(72) Inventeur: CLAPTIEN, Frédéric, 62830 Samer (FR); GOUEREC, Julien, 62360 La Capelle-Les-Boulogne (FR); LEFEBVRE, Philippe, 62930 Wimereux (FR)
(74) Mandataire: Cabinet Beau de Loménie
(86) Numéro de dépôt international: PCT/FR2015/053467
(87) Numéro de publication internationale: WO 2016/097553

(56) Documents cités:
- EP-A1- 2 660 072
- DE-A1-102004 021 048
- US-A- 4 209 332

## Description

La présente invention concerne les mines à base de polymère pour crayons à papier extrudables et ayant une facilité de gommage améliorée.

Les mines de crayon à papier à base de polymère sont connues de l'homme du métier.
En particulier la demande US2011/0118383 décrit une telle mine.
Toutefois cette mine doit comprendre de l'huile de palme de façon à améliorer son procédé de fabrication par extrusion. De plus cette huile permet d'améliorer la densité optique de la marque laissée par le crayon à papier sur le papier. Toutefois, cela a un effet contraire sur l'efficacité du gommage de cette marque: en raison de l'utilisation de cette matière grasse, le noir de carbone présent dans la mine va pénétrer profondément dans le papier et il sera difficile de le gommer. En outre, il y a un risque de fragilisation de la mine puisque l'huile de palme va diminuer ses propriétés mécaniques.
Afin d'améliorer le gommage, il est possible de diminuer la teneur en noir de carbone des mines de crayons à papier, puisque c'est le noir de carbone qui est le plus difficile à effacer. Toutefois, une telle diminution a pour conséquence l'obtention de crayon à papier dont la marque laissée sur le papier n'est pas assez foncée, c'est-à-dire n'ayant pas une noirceur suffisante.
Par ailleurs, il est nécessaire que la mine de crayon à papier ait une solidité suffisante et une résistance à la flexion suffisante afin qu'elle résiste aux conditions d'utilisation et qu'elle puisse être taillée sans se casser.

Il est donc difficile d'obtenir une mine présentant toute ces qualités : efficacité de gommage élevée, noirceur suffisante et propriétés mécaniques nécessaires à son utilisation.

Or les inventeurs se sont aperçus de façon surprenante qu'il était possible d'obtenir une mine à base de polymère pour crayon à papier ayant une facilité de gommage élevée tout en ayant une noirceur suffisante et une résistance à la flexion suffisante pour éviter de casser lors de son utilisation ou au moment où le crayon à papier est taillé en utilisant des proportions judicieusement choisies de graphite, de noir de carbone enrobé ou mélangé avec une cire de polyoléfine ou une polyoléfine, d'une charge minérale incolore et d'une polyoléfine.
La demande de brevet EP2660072 décrit un crayon coloré ayant une élasticité et une plasticité élevée et son procédé de fabrication. Ce crayon comprend d'après l'exemple 18 du graphite, du polypropylène, du talc et du noir de carbone. Toutefois, il ne s'agit pas d'une mine de crayon puisqu'il n'est pas destiné à être utilisé avec ou inséré dans une gaine. En outre le noir de carbone utilisé n'a pas été préalablement mélangé avec une cire de polyoléfine ou une polyoléfine avant son ajout dans la composition, ce qui peut poser des problèmes de gommabilité. Enfin la composition ne comprend pas de cire de polyoléfine.

La présente invention concerne donc une mine de crayon à papier, extrudable, en particulier extrudée, non expansée, comprenant, avantageusement étant constituée par, en poids par rapport au poids total de la mine:
- entre 40 et 60 %, avantageusement entre 44 et 50 %, de graphite ;
- entre 15 et 40 %, avantageusement entre 20 et 35 %, d'une polyoléfine;
- entre 5 et 15 %, avantageusement entre 6 et 10 %, d'une charge minérale incolore ;
- entre 5 et 20 %, avantageusement entre 5 et 15 %, de noir de carbone enrobé par ou mélangé avec une cire de polyoléfine ou une polyoléfine, en particulier une cire de polyoléfine;
- entre 0 et 16 %, avantageusement entre 5 et 15 %, d'un additif.

La mine selon la présente invention appartient donc à la catégorie des mines graphites à base polymère, ici à base de polyoléfine.
La mine selon la présente invention est extrudable, c'est-à-dire qu'elle peut être obtenue par extrusion. De façon avantageuse elle est extrudée. La mine selon la présente invention est non expansée. Ainsi donc aucun agent d'expansion n'est utilisé lors de son procédé de fabrication. En outre la polyoléfine utilisée n'est pas expansée.
La mine selon la présente invention est une mine de crayon à papier, c'est-à-dire destinée à être utilisée dans des crayons à papier, en particulier dans des crayons à papier enrobé de bois ou de matière synthétique de bois, comprenant éventuellement une couche intermédiaire de protection, en particulier tel que décrit dans la demande de brevet WO01/43987.

La mine de crayon à papier selon la présente invention comprend donc entre 40 et 60 % en poids de graphite par rapport au poids total de la mine, avantageusement entre 44 et 50 % en poids de graphite par rapport au poids total de la mine, encore plus avantageusement entre 44 et 48 % en poids de graphite par rapport au poids total de la mine, plus particulièrement entre 44,5 % et 47 % en poids de graphite par rapport au poids total de la mine.

En particulier le graphite a une taille de particules D50 en volume mesurée par granulométrie laser, par exemple par un granulomètre laser (diffraction) de marque Sympatec Helios, comprise entre 15 et 20 µm (mesure volumétrique de la distribution de taille des particules - Fraunhofer méthode ISO 13320).
Le graphite permet de conférer à la mine une partie de ses bonnes propriétés mécaniques, en particulier de résistance à la flexion, selon la taille et la forme de particules de graphite utilisées et de la douceur lors de l'écriture tout en lui apportant une partie de la noirceur.

La mine de crayon à papier selon la présente invention comprend en outre entre 15 et 40 % en poids d'une polyoléfine par rapport au poids total de la mine, avantageusement entre 20 et 35 % en poids d'une polyoléfine par rapport au poids total de la mine, plus avantageusement entre 23 et 31 % en poids d'une polyoléfine par rapport au poids total de la mine, encore plus avantageusement entre 24 et 30 % en poids d'une polyoléfine par rapport au poids total de la mine.
La polyoléfine est le principal polymère de la mine. De façon encore plus avantageuse la mine ne comprend pas d'autres polymères. Avantageusement la polyoléfine peut-être du polyéthylène ou du polypropylène, en particulier il s'agit du polypropylène, plus particulièrement du polypropylène homopolymère.
La polyoléfine permet de rendre la mine extrudable et de lui conférer de bonnes propriétés mécaniques de résistante à la flexion.

La mine de crayon à papier selon la présente invention comprend de plus entre 5 et 15 % en poids d'une charge minérale incolore par rapport au poids total de la mine, avantageusement entre 6 et 10 % en poids d'une charge minérale incolore par rapport au poids total de la mine.

Dans un mode de réalisation avantageux la charge minérale incolore est choisie parmi une argile, du talc, du nitrure de bore, de la silice, du carbonate de calcium, du mica, de la poudre de stéatite et leurs mélanges, avantageusement elle est choisie parmi une argile, de la silice et du talc. Plus avantageusement il s'agit charge minérale incolore lamellaire, plus particulièrement choisie parmi une argile, du nitrure de bore, du mica et/ou du talc, par exemple une argile en particulier choisie parmi la montmorillonite, la bentonite et le kaolin, plus particulièrement il s'agit du kaolin ou de la bentonite, en particulier du kaolin ayant une taille de particules D50 en masse mesurée par sédimentation par exemple en utilisant un appareil SEDIGRAPH® de la société Micromeritics, comprise entre 2 et 5 µm, par exemple commercialisé par la société SOKA sous la dénomination BLANKALITE 77. Il peut également s'agir d'une bentonite ayant une taille de particules D50 en volume mesurée par granulométrie laser comprise entre 10 et 15 µm, par exemple commercialisée par la société COMERCIAL QUIMICA MASSO sous la dénomination BENTONITA BLANCA.
La silice et le talc ont pour but d'apporter des propriétés mécaniques à la mine, telle que la résistance à la flexion et/ou la résistance à la rupture. Les charges minérales lamellaires ont pour but d'apporter de la douceur lors de l'écriture et de maintenir une structure qui se délite sur le papier à l'image des feuillets de graphite.

La mine de crayon à papier selon la présente invention comprend en outre entre 5 et 20 % en poids de noir de carbone enrobé par ou mélangé avec une cire de polyoléfine ou une polyoléfine par rapport au poids total de la mine, avantageusement entre 5 et 15 % en poids de noir de carbone enrobé par ou mélangé avec une cire de polyoléfine ou une polyoléfine par rapport au poids total de la mine, plus avantageusement entre 6 et 13 % en poids de noir de carbone enrobé par ou mélangé avec une cire de polyoléfine ou une polyoléfine par rapport au poids total de la mine, encore plus avantageusement entre 7 et 10 % en poids de noir de carbone enrobé par ou mélangé avec une cire de polyoléfine ou une polyoléfine par rapport au poids total de la mine, en particulier entre 8 et 9 % en poids de noir de carbone enrobé par ou mélangé avec une cire de polyoléfine ou une polyoléfine par rapport au poids total de la mine.
Le noir de carbone utilisé peut donc être enrobé par ou mélangé avec une cire de polyoléfine ou une polyoléfine, en particulier enrobé par ou mélangé avec une cire de polyoléfine (par exemple sous forme d'un mélange maître, d'une préparation pigmentaire ou d'une dispersion de noir de carbone dans une cire ou dans la polyoléfine, en particulier dans une cire).
Le noir de carbone permet d'apporter la noirceur à la mine alors que la cire de polyoléfine ou la polyoléfine permet d'améliorer la facilité de gommage puisqu'elle évite à la poudre de noir de carbone de pénétrer le support sur lequel est réalisée la marque avec le crayon à papier comprenant la mine selon la présente invention. Le mélange ou l'enrobage avec la polyoléfine ou la cire de polyoléfine a donc lieu avant l'ajout dans la composition de la mine selon l'invention.
La cire de polyoléfine est plus avantageuse qu'une polyoléfine car la douceur sur le papier est meilleure avec un noir de carbone mélangé avec ou enrobé par une cire de polyoléfine plutôt que par une polyoléfine. D'autre part, la dispersion dans le mélange et donc l'homogénéité et la noirceur sont meilleures avec l'utilisation d'un enrobage ou d'un mélange cire de polyoléfine.
De façon avantageuse la polyoléfine est du polypropylène ou du polyéthylène ou leur mélange, avantageusement il s'agit de polyéthylène, par exemple de polyéthylène basse densité.

Dans un mode de réalisation particulier la teneur en noir de carbone du noir de carbone enrobé par ou mélangé avec une cire de polyoléfine ou une polyoléfine est compris entre 25 et 65 % en poids, avantageusement entre 30 et 60 % en poids, par rapport au poids total du noir de carbone enrobé par ou mélangé avec une cire de polyoléfine ou une polyoléfine. Dans un mode de réalisation particulièrement avantageux, le noir de carbone utilisé dans la mine selon la présente invention est le noir de carbone enrobé par une cire de polyoléfine. Avantageusement, dans ce cas, la teneur en noir de carbone du noir de carbone enrobé par une cire de polyoléfine est comprise entre 40 et 65 % en poids par rapport au poids total du noir de carbone enrobé par une cire de polyoléfine.
De façon avantageuse la cire de polyoléfine est une cire de polypropylène ou de polyéthylène ou de leur mélange, avantageusement il s'agit d'une cire de polyéthylène, par exemple de polyéthylène basse densité. Avantageusement le noir de carbone enrobé par une cire de polyoléfine est disponible commercialement auprès de la société SunChemical sous la dénomination Sunfast® PE Flush Black L47-9000.

La mine de crayon à papier selon la présente invention peut comprendre un additif, en une teneur comprise entre 0 et 16 % en poids par rapport au poids total de la mine, avantageusement comprise entre 5 et 15 % en poids par rapport au poids total de la mine, plus avantageusement en une teneur comprise entre 6 et 14,5 % en poids par rapport au poids total de la mine.
Cet additif peut être choisi parmi les additifs bien connus de l'homme du métier dans le domaine des mines pour crayon papier, en particulier parmi les agents glissant, les agents de mise en œuvre, les agents de couplage, les agents dispersants, les lubrifiants et leurs mélanges, avantageusement parmi les stéarates tels que le stéarate de calcium, le stéarate de magnésium, le stéarate de sodium, le stéarate de zinc et leurs mélanges, une amide, en particulier une stéaramide tel que l'éthylène bis stéaramide, les cires, les acides gras, le glycérol et ses dérivés tel que le béhénate de glycérol, le dibéhénate de glycérol, le stéarate de glycérol et/ou le diisostéarate de polyglycérol, le siloxane greffé sur du polypropylène, le polypropylène greffé anhydride maléique et leurs mélanges, plus avantageusement le stéarate de calcium, l'éthylène bis stéaramide et leurs mélanges.
De façon avantageuse la mine selon la présente invention comprend du stéarate de calcium, en particulier en une teneur comprise entre 5 et 10 % en poids, de façon avantageuse entre 6 et 9 % en poids, par rapport au poids total de la mine. Le stéarate de calcium permet d'apporter de la douceur et du glissant sur le papier.
Dans un autre mode de réalisation avantageux, la mine selon la présente invention comprend une amide, en particulier une stéaramide telle que l'éthylène bis stéaramide, avantageusement en une teneur comprise entre 0,5 et 3 % en poids, de façon avantageuse entre 1 et 2,5 % en poids, par rapport au poids total de la mine. L'amide permet d'aider à la dispersion des charges dans la composition et a également un léger effet positif sur le glissant.
La mine selon la présente invention peut également comprendre du glycérol et ses dérivés tel que le béhénate de glycérol, le dibéhénate de glycérol, le stéarate de glycérol et/ou le diisostéarate de polyglycérol, avantageusement en une teneur comprise entre 0 et 4 % en poids, plus avantageusement entre 1 et 3 % en poids, par rapport au poids total de la mine. Le glycérol et ses dérivés ont une effet lubrifiant.
La mine selon la présente invention peut également comprendre du siloxane greffé sur du polypropylène, avantageusement en une teneur comprise entre 0 et 7 % en poids, plus avantageusement entre 1 et 6 % en poids, par rapport au poids total de la mine. Le siloxane greffé sur du polypropylène diminue le coefficient de friction, améliore la résistance à l'usure/abrasion et aide à la dispersion des charges.
La mine selon la présente invention peut également comprendre un agent de couplage, en particulier un agent de couplage base polypropylène, tel que par exemple le polypropylène greffé anhydride maléique, avantageusement en une teneur comprise entre 0 et 4 % en poids, plus avantageusement entre 1 et 3 % en poids, par rapport au poids total de la mine.

Dans un mode de réalisation particulièrement avantageux, la mine de crayon à papier selon la présente invention ne comprend pas de plastifiant.
Dans un autre mode de réalisation avantageux, la mine de crayon à papier selon la présente invention ne comprend pas d'huile de palme.

Dans un mode de réalisation particulier de la présente invention, la mine a un diamètre compris entre 2 et 3,6 mm, de façon avantageuse il s'agit d'une mine ayant un diamètre compris entre 2 et 2,3 mm.

La mine selon la présente invention peut être fabriquée par des procédés bien connus de l'homme du métier.
Par exemple tous les composants sont mélangés entre eux et le mélange obtenu est extrudée aux températures adéquates. La mine obtenue est ensuite refroidie.

La mine selon la présente invention a donc une noirceur suffisante tout en possédant de bonnes propriétés mécaniques, en particulier de résistance à la flexion et/ou de résistance aux chocs, et en présentant une facilité de gommage améliorée.

La présente invention concerne également un crayon à papier comprenant une mine selon la présente invention, en particulier un crayon à papier enrobé de bois ou de matière synthétique de bois, comprenant éventuellement une couche intermédiaire de protection, par exemple tel que décrit dans la demande de brevet WO01/43987.
De façon avantageuse le crayon à papier est obtenu par coextrusion de la mine et de la matière synthétique de bois et éventuellement de la couche intermédiaire de protection.
En particulier la matière synthétique de bois est à base de polymère styrénique et la couche intermédiaire de protection joue également le rôle de couche d'adhésion et peut avantageusement comprendre un mélange d'EVA et de polystyrène.
De façon avantageuse la matière synthétique de bois est expansée, afin de présenter une densité équivalente au bois naturel.
Avantageusement le crayon à écrire selon la présente invention peut avoir une section hexagonale, ronde ou triangulaire, avantageusement ronde ou hexagonale.
Da façon avantageuse, il peut comporter un moyen pour effacer, telle qu'une gomme, à l'extrémité non taillée du crayon.

L'invention sera mieux comprise à la lecture de la description des exemples qui suivent qui sont donnés à titre indicatif non limitatif.

### Exemple 1

Dans les deux tableaux ci-dessous sont rassemblés des exemples de compositions de mine selon la présente invention permettant d'obtenir les caractéristiques d'amélioration de la facilité de gommage, d'une bonne noirceur et des propriétés mécaniques suffisantes pour être utilisées dans des crayons à papier.

**Tableau 1**

| **Composition (% en poids)** / **exemple** | **N°1** | **N°2** | **N°3** | **N°4** | **N°5** |
|---|---|---|---|---|---|
| Polypropylène | 26 | 26 | 26 | 24 | 26 |
| Kaolin | 8 | 6 | | 10 | |
| Talc | | | 8 | | |
| Silice | | | | | 8 |
| Noir de carbone enrobé de cire de polyéthylène | | 9 | 9 | 9 | 9 |
| Mélange maître noir de carbone / base polyéthylène basse densité | 9 | | | | |
| Graphite | 47 | 47 | 47 | 47 | 47 |
| Additif | 10 | 12 | 10 | 10 | 10 |
| Total | 100 | 100 | 100 | 100 | 100 |

**Tableau 2**

| **Composition (% en poids)/ exemple** | **N°6** | **N°7** | **N°8** |
|---|---|---|---|
| Polypropylène | 30 | 24,8 | 26 |
| Kaolin | 8 | 7,5 | |
| Bentonite | | | 8 |
| Noir de carbone enrobé de cire de polyéthylène | 9 | 8,5 | 9 |
| Graphite | 45 | 44,8 | 47 |
| additif | 8 | 14,4 | 10 |
| Total | 100 | 100 | 100 |

## Revendications

1. Mine de crayon à papier, extrudable, non expansée, comprenant, en poids par rapport au poids total de la mine :
- entre 40 et 60 %, avantageusement entre 44 et 50 %, de graphite ;
- entre 15 et 40 %, avantageusement entre 20 et 35 %, d'une polyoléfine;
- entre 5 et 15 %, avantageusement entre 6 et 10 %, d'une charge minérale incolore ;
- entre 5 et 20 %, avantageusement entre 5 et 15 %, de noir de carbone enrobé par ou mélangé avec une cire de polyoléfine ou une polyoléfine;
- entre 0 et 16 %, avantageusement entre 5 et 15 %, d'un additif.

2. Mine de crayon à papier selon la revendication 1, **caractérisée en ce que** la polyoléfine est du polypropylène.

3. Mine de crayon à papier selon l'une quelconque des revendications 1 ou 2, **caractérisée en ce que** la charge minérale incolore est choisie parmi une argile, du talc, du nitrure de bore, de la silice, du carbonate de calcium, du mica, de la poudre de stéatite et leurs mélanges, avantageusement il s'agit d'une argile.

4. Mine de crayon à papier selon la revendication 3, **caractérisée en ce que** la charge minérale incolore est une charge minérale lamellaire, en particulier une argile choisie parmi la montmorillonite, la bentonite et le kaolin, avantageusement il s'agit du kaolin.

5. Mine de crayon à papier selon l'une quelconque des revendications 1 à 4, **caractérisée en ce que** la teneur en noir de carbone du noir de carbone enrobé par ou mélangé avec une cire de polyoléfine ou une polyoléfine est compris entre 25 et 65 %, avantageusement entre 30 et 60 % en poids par rapport au poids total du noir de carbone enrobé par ou mélangé avec une cire de polyoléfine ou une polyoléfine.

6. Mine de crayon à papier selon l'une quelconque des revendications 1 à 5, **caractérisé en ce que** le noir de carbone est enrobé par une cire de polyoléfine, avantageusement **en ce que** sa teneur en noir de carbone est comprise entre 40 et 65 % en poids par rapport au poids total du noir de carbone enrobé par une cire de polyoléfine.

7. Mine de crayon à papier selon l'une quelconque des revendications 1 à 6, **caractérisée en ce que** la cire de polyoléfine est une cire de polyéthylène.

8. Mine de crayon à papier selon l'une quelconque des revendications 1 à 7, **caractérisée en ce que** l'additif est choisi parmi les agents glissant, les agents de mise en œuvre, les agents de couplage, les agents dispersants, les lubrifiants et leurs mélanges, avantageusement parmi les stéarates tels que le stéarate de calcium, le stéarate de magnésium, le stéarate de sodium, le stéarate de zinc et leurs mélanges, une amide tel que l'éthylène bis stéaramide, les cires, les acides gras, le glycérol et ses dérivés tel que le béhénate de glycérol, le siloxane greffé sur du polypropylène, le polypropylène greffé anhydride maléique et leurs mélanges.

9. Mine de crayon à papier selon l'une quelconque des revendications 1 à 8, **caractérisée en ce qu'**elle ne comprend pas de plastifiant.

10. Mine de crayon à papier selon l'une quelconque des revendications 1 à 9, **caractérisée en ce qu'**elle est extrudée.

11. Mine de crayon à papier selon l'une quelconque des revendications 1 à 10, **caractérisée en ce que** le graphite a une taille de particules D50 en volume mesurée par granulométrie laser comprise entre 15 et 20 µm.

12. Crayon à papier comprenant une mine selon l'une quelconque des revendications 1 à 11.

## Patentansprüche

1. Extrudierbare, nicht expandierte Bleistiftmine, umfassend, bezogen auf das Gewicht im Verhältnis zum Gesamtgewicht der Mine:
- zwischen 40 und 60 %, vorzugsweise zwischen 44 und 50 %, Graphit;
- zwischen 15 und 40 %, vorzugsweise zwischen 20 und 35 %, eines Polyolefins;
- zwischen 5 und 15 %, vorzugsweise zwischen 6 und 10 %, eines farblosen mineralischen Füllstoffs;
- zwischen 5 und 20 %, vorzugsweise zwischen 5 und 15 %, Ruß, der mit einem Polyolefinwachs oder Polyolefin beschichtet oder damit gemischt ist;
- zwischen 0 und 16 %, vorzugsweise zwischen 5 und 15 %, eines Zusatzstoffs.

2. Bleistiftmine nach Anspruch 1, **dadurch gekennzeichnet, dass** das Polyolefin Polypropylen ist.

3. Bleistiftmine nach einem der Ansprüche 1 oder 2, **dadurch gekennzeichnet, dass** der farblose mineralische Füllstoff ausgewählt ist aus einem Ton, Talkum, Bornitrid, Siliciumdioxid, Calciumcarbonat, Glimmer, Specksteinpulver und Mischungen davon, wobei es vorzugsweise ein Ton ist.

4. Bleistiftmine nach Anspruch 3, **dadurch gekennzeichnet, dass** der farblose mineralische Füllstoff ein lamellarer mineralischer Füllstoff ist, insbesondere ein Ton, ausgewählt aus Montmorillonit, Bentonit und Kaolin, vorzugsweise Kaolin.

5. Bleistiftmine nach einem der Ansprüche 1 bis 4, **dadurch gekennzeichnet, dass** der Rußgehalt des mit einem Polyolefinwachs oder einem Polyolefin beschichteten oder damit vermischten Rußes zwischen 25 und 65 Gew.-%, vorzugsweise zwischen 30 und 60 Gew.-%, bezogen auf das Gesamtgewicht des mit einem Polyolefinwachs oder einem Polyolefin beschichteten oder damit vermischten Rußes beträgt.

6. Bleistiftmine nach einem der Ansprüche 1 bis 5, **dadurch gekennzeichnet, dass** der Ruß mit einem Polyolefinwachs beschichtet ist, vorzugsweise dadurch, dass sein Rußgehalt zwischen 40 und 65 Gew.-%, bezogen auf das Gesamtgewicht des mit einem Polyolefinwachs beschichteten Rußes, liegt.

7. Bleistiftmine nach einem der Ansprüche 1 bis 6, **dadurch gekennzeichnet, dass** das Polyolefinwachs ein Polyethylenwachs ist.

8. Bleistiftmine nach einem der Ansprüche 1 bis 7, **dadurch gekennzeichnet, dass** das Additiv ausgewählt ist aus Gleitmitteln, Verarbeitungsmitteln, Haftvermittlern, Dispergiermitteln, Schmiermitteln und Mischungen davon, vorzugsweise aus Stearaten wie Calciumstearat, Magnesiumstearat, Natriumstearat, Zinkstearat und Mischungen davon, einem Amid wie Ethylen-bis-Stearamid, Wachsen, Fettsäuren, Glycerin und seinen Derivaten wie Glycerinbehenat, Polypropylen-gepfropftem Siloxan, Maleinsäureanhydrid-gepfropftem Polypropylen und Mischungen davon.

9. Bleistiftmine nach einem der Ansprüche 1 bis 8, **dadurch gekennzeichnet, dass** sie frei von Weichmachern ist.

10. Bleistiftmine nach einem der Ansprüche 1 bis 9, **dadurch gekennzeichnet, dass** sie extrudiert ist.

11. Bleistiftmine nach einem der Ansprüche 1 bis 10, **dadurch gekennzeichnet, dass** der Graphit eine Volumenteilchengröße D50, gemessen als Laserteilchengröße, von 15 bis 20 µm aufweist.

12. Bleistift, umfassend eine Mine nach einem der Ansprüche 1 bis 11.

## Claims

1. Extrudable, non-expanded paper pencil lead, comprising, by weight relative to the total weight of the lead:
- between 40 and 60%, advantageously between 44 and 50%, of graphite;
- between 15 and 40%, advantageously between 20 and 35%, of a polyolefin;
- between 5 and 15%, advantageously between 6 and 10%, of a colorless mineral filler;
- between 5 and 20%, advantageously between 5 and 15%, of carbon black coated with or mixed with a polyolefin wax or a polyolefin;
- between 0 and 16%, advantageously between 5 and 15%, of an additive.

2. Paper pencil lead according to claim 1, **characterized in that** the polyolefin is polypropylene.

3. Paper pencil lead according to either one of claims 1 or 2, **characterized in that** the colorless mineral filler is selected from a clay, talc, boron nitride, silica, calcium carbonate, mica, steatite powder and mixtures thereof, advantageously said filler is a clay.

4. Paper pencil lead according to claim 3, **characterized in that** the colorless mineral filler is a lamellar mineral filler, in particular a clay selected from montmorillonite, bentonite and kaolin, advantageously said filler is kaolin.

5. Paper pencil lead according to any one of claims 1 to 4, **characterized in that** the carbon black content of the carbon black coated with or mixed with a polyolefin wax or a polyolefin is between 25 and 65%, advantageously between 30 and 60% by weight relative to the total weight of the carbon black coated with or mixed with a polyolefin wax or a polyolefin.

6. Paper pencil lead according to any one of claims 1 to 5, **characterized in that** the carbon black is coated with a polyolefin wax, advantageously **in that** the carbon black content thereof is between 40 and 65% by weight relative to the total weight of the carbon black coated with a polyolefin wax.

7. Paper pencil lead according to any one of claims 1 to 6, **characterized in that** the polyolefin wax is a polyethylene wax.

8. Paper pencil lead according to any one of claims 1 to 7, **characterized in that** the additive is selected from slip agents, processing agents, coupling agents, dispersants, lubricants and mixtures thereof, advantageously from stearates such as calcium stearate, magnesium stearate, sodium stearate, zinc stearate and mixtures thereof, an amide such as ethylene bis stearamide, waxes, fatty acids, glycerol and derivatives thereof such as glyceryl behenate, siloxane grafted on polypropylene, maleic anhydride-grafted polypropylene and mixtures thereof.

9. Paper pencil lead according to any one of claims 1 to 8, **characterized in that** it does not comprise plasticizer.

10. Paper pencil lead according to any one of claims 1 to 9, **characterized in that** it is extruded.

11. Paper pencil lead according to any one of claims 1 to 10, **characterized in that** the graphite has a D50 particle size by volume, measured by laser particle size analysis, of between 15 and 20 µm.

12. Paper pencil comprising a lead according to any one of claims 1 to 11.
